# EUROPÄISCHE PATENTSCHRIFT

(11) **EP 2 995 920 B1**
(45) Veröffentlichungstag und Bekanntmachung des Hinweises auf die Patenterteilung: **28.02.2018**
(21) Anmeldenummer: 15002672.2
(22) Anmeldetag: 15.09.2015
(51) Int. Cl.: G01L 5/28, G01M 17/007

(54) **BREMSENPRÜFSTAND MIT NIEDERSPANNVORRICHTUNG**
BRAKE TEST BENCH HAVING HOLD-DOWN DEVICE
BANC D'ESSAI DE FREINS DOTE D'UN DISPOSITIF DE SIMULATION DE CHARGE

(30) Priorität: 15.09.2014 DE 102014013324
(43) Veröffentlichungstag der Anmeldung: 16.03.2016
(73) Patentinhaber: ATT Nussbaum Prüftechnik GmbH, 77694 Kehl-Auenheim (DE)
(72) Erfinder: Gnielka, Peter, 77731 Willstätt (DE)
(74) Vertreter: Lemcke, Brommer & Partner Patentanwälte Partnerschaft mbB

(56) Entgegenhaltungen:
- GB-A- 1 270 555
- GB-A- 2 382 632
- SU-A1- 646 213

## Beschreibung

Die Erfindung betrifft einen Bremsenprüfstand mit den Merkmalen des Oberbegriffes von Patentanspruch 1.

Derartige Bremsenprüfstände sind in diversen Bauformen bekannt. Dabei wird das Rad eines Kraftfahrzeuges, meist alle Räder einer Achse, deren Bremsen geprüft werden sollen, auf jeweils einen Rollensatz einer Rolleneinheit gestellt, wobei die Rollen des Rollensatzes von einem Motor angetrieben werden. Beim Betätigen der betreffenden Radbremse wird das erzeugte Bremsmoment, z. B. als Rückdrehmoment des den Rollensatz antreibenden Motors gemessen und so die Bremswirkung des jeweiligen Rades erfasst. Zwischen den beiden Rolleneinheiten, die zur Ermittlung der Bremswirkung der Räder einer Achse vorgesehen sind, befindet sich typischerweise eine Grube, in die die Prüfperson hinabsteigen kann, um vor, während oder nach der Ermittlung der Bremswirkung des jeweiligen Rades weitere Inspektionen vorzunehmen.

Diese Bremsenprüfstände haben sich bei Personenkraftfahrzeugen mit zwei Achsen bestens bewährt. Bei Nutzfahrzeugen, die typischerweise Doppel- oder Mehrfachachsen aufweisen, treten jedoch bei der Bremsenprüfung mitunter ungenügende Bremswerte an den jeweiligen Rädern der Doppel- oder Mehrfachachsen auf. Ursächlich hierfür ist insbesondere der Umstand, dass die im Bremsenprüfstand stehende Achse durch die daneben stehende Achse, deren Räder auf dem Werkstattboden stehen, eine gewisse Entlastung erfährt. Dadurch wird der Anpressdruck des Kraftfahrzeugrades auf den Rollensatz, auf dem das jeweilige Kraftfahrzeugrad aufliegt, verringert, so dass das Rad durchrutscht.

Es ist daher bekannt Bremsenprüfstände, insbesondere Bremsenprüfstände, die für Fahrzeuge mit Doppel- oder Mehrfachachsen vorgesehen sind, mit so genannten Niederspannvorrichtungen auszustatten. Die bekannten Niederspannvorrichtungen weisen Hydraulikzylinder auf, die an den Seitenwänden oder auf dem Boden der Grube festgelegt und vertikal ausgerichtet sind. An den Hydraulikzylindern sind Spannmittel in Form von Gurten, Ketten oder dergleichen festgelegt oder festlegbar, die typischerweise um die Achse des jeweiligen Kraftfahrzeugs herumgelegt bzw. in sonstiger Weise am Kraftfahrzeug befestigt werden. Durch Absenken der Kolbenstangen der Hydraulikzylinder werden die Spannmittel gespannt und die Räder des Kraftfahrzeuges zusätzlich gegen den jeweiligen Rollensatz gedrückt.

Die vorliegende Erfindung geht von der Erkenntnis aus, dass die Hydraulikzylinder, die an den Seiten oder dem Boden der Grube festgelegt sind, den Bewegungsspielraum für die Prüfperson einengen und dadurch die Bedienung des Prüfstandes erschwert wird.

Es ist zwar durch die DE 3233960 C1 bekannt, die Niederspannvorrichtung innerhalb des Bremsenprüfstandes zu installieren. Die Bremsenprüfstände werden dadurch aber so breit, dass dazwischen kein Platz mehr für eine Grube frei bleibt. Durch den Wegfall der Grube wird die Bedienung des Bremsenprüfstandes, insbesondere das Umschlingen der Fahrzeugachse durch die üblichen Spannmittel, sehr erschwert. Auch eine optische Inspektion der Bremsanlage ist weitgehend ausgeschlossen.

Des Weiteren gestattet der genannte Bremsenprüfstand keine gezielte Steuerung der Anpresskraft, denn der Bremsenprüfstand hat keine eigene Spannvorrichtung, sondern gewinnt die Spannkraft aus dem beim Bremsen auftretenden Reaktionsmoment am Rollensatz.

Ein Bremsenprüfstand mit den Merkmalen des Oberbegriffes von Patentanspruch 1 ist durch die SU 646 213 A1 bekannt. Dabei besteht das Spannelement aus einer Winde, von der aus ein Seil 5 schräg nach oben zu einer um die Fahrzeugachse herum gelegten Kette. Auf diese Weise soll eine Kraftkomponente in horizontaler Richtung erzeugt werden, die der beim Bremsen auftretenden horizontalen Reaktionskraft entgegengerichtet ist.

Außerdem ist durch die GB 1 270 555 A ein Bremsenprüfstand mit einer Niederspannvorrichtung bekannt geworden, bei welcher eine um die Fahrzeugachse herumgelegte Kette ebenfalls schräg nach unten verläuft, um eine horizontale Kraftkomponente zu erzeugen, die dem Herausspringen des Fahrzeugrades aus dem Rollensatz verhindert.

Schließlich ist es durch die GB 2 382 632 A bekannt, die Spannvorrichtung für einen Bremsenprüfstand nicht auf die Radachse, sondern auf das Chassis hinter den Fahrzeugrädern einwirken zu lassen.

Der Erfindung liegt daher die Aufgabe zugrunde, einen Bremsenprüfstand mit einer Niederspannvorrichtung der eingangs genannten Art dahingehend zu verbessern, dass eine Behinderung des Prüfpersonals vermieden wird.

Außerdem soll sich der erfindungsgemäße Bremsenprüfstand mit seiner Niederspannvorrichtung durch kompakten, wartungsarmen und kostengünstigen Aufbau auszeichnen.

Erfindungsgemäß wird diese Aufgabe durch die Merkmale des Patentanspruches 1 gelöst.

Das erfindungsgemäße Konzept, bei dem das Spannelement in die Rolleneinheit integriert ist, hat den Vorteil, dass die Grube, in der sich die Prüfperson zur Inspektion des Fahrzeuges frei bewegen können muss, keine Anbauteile des Bremsenprüfstands aufweist, die die Prüfperson bei der Arbeit behindern oder gegebenenfalls sogar gefährden könnten. Dadurch, dass das Spannelement in die Rolleneinheit integriert und vollständig unter dem Rollensatz angeordnet ist, kann zudem eine in vorteilhafter Weise sehr kompakte Bauform der Rolleneinheit geschaffen werden, für die keine weiteren Anbauteile, die beispielsweise an der Innenseite der Grube festgelegt werden müssen, erforderlich sind.

Durch Einbau des Spannelementes und dessen beweglicher Teile in die Rolleneinheit ist zudem gewährleistet, dass im Vergleich zu den bekannten Niederspannvorrichtungen, mit vertikal ausgerichteten und an den Grubenwänden oder dem Grubenboden festgelegten Hydraulikzylindern eine Verschmutzung bzw. Beschädigung des Spannelements nahezu ausgeschlossen ist. Dadurch können die üblichen Wartungszyklen erheblich verlängert werden.

Anstelle des bisherigen in Vertikalrichtung wirkenden Spannelementes wird ein horizontal wirkendes Spannelement eingebaut. Man reduziert dadurch den Platzbedarf, so dass das Spannelement auch nachträglich noch in herkömmliche Bremsenprüfstände eingebaut werden kann.

Die Niederspannvorrichtung weist eine Umlenkvorrichtung zum Umlenken des Verbindungsmittels von einer im Wesentlichen horizontalen Ausrichtung in eine im Wesentlichen vertikale Ausrichtung auf, wobei diese Umlenkvorrichtung zumindest eine Umlenkrolle aufweist. Durch diese Umlenkvorrichtung wird es möglich, die primär etwa horizontale Spannkraft in die zum Niederspannen des Fahrzeuges erforderliche etwa vertikal gerichtete Kraft umzulenken.

Weitere Merkmale und Vorteile ergeben sich aus den Unteransprüchen und aus der nachfolgenden Beschreibung und der beigefügten Zeichnung.

Ausführungsbeispiele der Erfindung sind in der Zeichnung dargestellt und werden mit Bezug auf diese näher beschrieben. Es zeigen:
- Figur 1: ausschnittsweise einen Bremsenprüfstand mit einer Rolleneinheit und einer Niederspannvorrichtung in einer perspektivischen Explosions-darstellung;
- Figur 2: die Rolleneinheit in Figur 1 in einem vertikalen Längsschnitt parallel zur Rollenachse in einer gegenüber Figur 1 vergrößerten Ansicht;
- Figur 3: eine Niederspannvorrichtung gemäß einer ersten Ausführungsform;
- Figur 4: eine Niederspannvorrichtung gemäß einer weiteren Ausführungsform;
- Figur 5: eine Niederspannvorrichtung gemäß einer noch weiteren Ausführungsform.

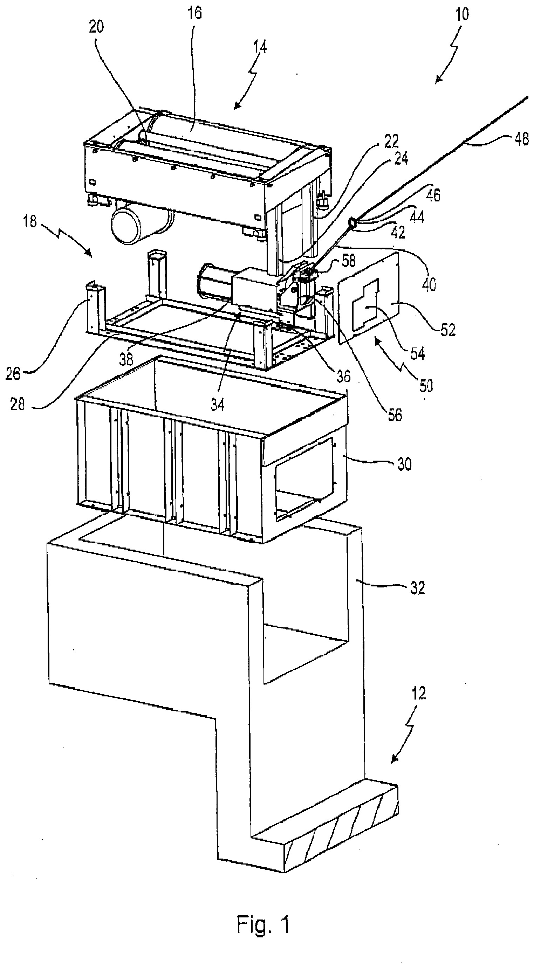

In Figur 1 ist ein mit dem allgemein in Bezugszeichen 10 versehener Bremsenprüfstand in einer Längsschnittdarstellung entlang des Bodens einer Grube 12 gezeigt, mit einer Rolleneinheit 14, die einen angetriebenen Rollensatz 16 aufweist, auf dem die Räder eines Kraftfahrzeugs, insbesondere eines Kraftfahrzeugs mit Doppel- oder Mehrfachachsen zur Ermittlung der Bremswirkung der jeweiligen Bremse aufgenommen ist. Typischerweise wird die Bremswirkung an den Rädern einer Achse bestimmt, weshalb der Bremsenprüfstand einen zum Rollensatz 16 baugleichen Rollensatz auf der gegenüberliegenden Seite der Grube 12 aufweist um die Bremswirkung aller Räder einer Achse zu ermitteln (nicht abgebildet).

Der Rollensatz 16 ist in eine Einhausung 18 aufgenommen, wobei die Einhausung 18 eine Aussparung 20 aufweist, um ein Durchgreifen eines Kraftfahrzeugrades auf den Rollensatz zu ermöglichen. Die Einhausung weist zudem zwei vertikal verlaufende Trägerelemente 22, 24 und einen Rahmen 26 auf, die der Einhausung 18 die nötige Stabilität verleihen. Der Rahmen 26 weist zudem einen Boden 28 auf, an dem die Rolleneinheit 14 fest mit einer Einbauschalung 30 verbunden ist, wobei die Einbauschalung 30 in ein Fundament 32 aufgenommen und fest mit dem Fundament 32 verbunden ist. Die Einbauschalung 30 kann optional entfallen, wobei der Rahmen 26 hierbei direkt mit dem Fundament verbunden ist (nicht abgebildet).

Im Zwischenraum zwischen dem Boden 28 und dem Rollensatz 16 ist eine Niederspannvorrichtung 34 aufgenommen, wobei die Niederspannvorrichtung 34 durch Befestigungsmittel 36 am Boden 28 des Rahmens 26 festgelegt ist. Es versteht sich jedoch, dass die Niederspannvorrichtung 34 auch an einer sonstigen Stelle am Rahmen 26 bzw. an den Trägerelementen 22, 24 festlegbar ist (nicht abgebildet). Zudem versteht sich, dass die Niederspannvorrichtung 34 nicht wie vorliegend an der dem Rollensatz zugewandten Seite des Bodens sondern auch auf der dem Rollensatz 16 abgewandten Seite des Bodens zwischen Einbauschalung 30 und Rahmen 26 in einem Zwischenraum aufgenommen und am Rahmen 26 festgelegt sein kann (nicht abgebildet).

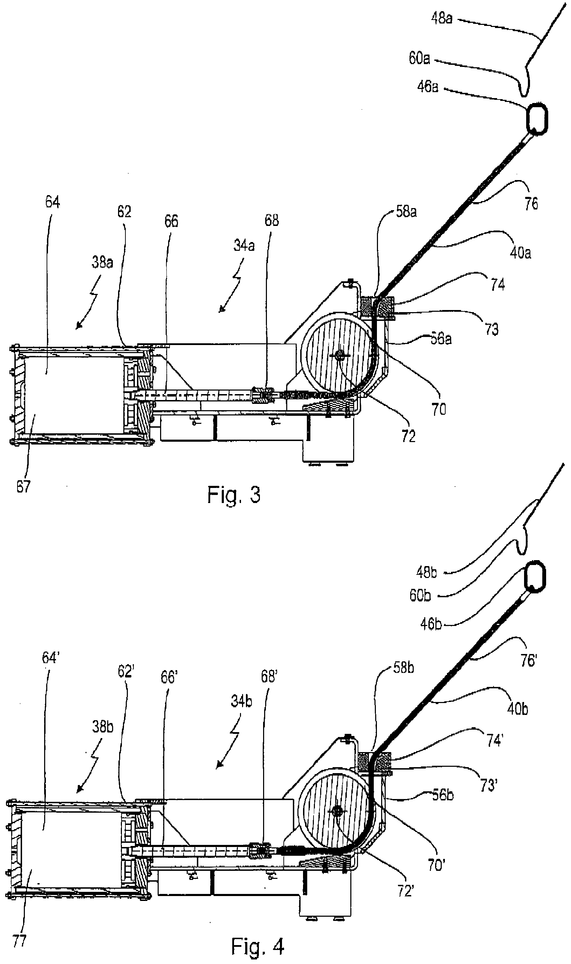

Die Niederspannvorrichtung 34 weist ein Spannelement 38 auf, das ein Verbindungsmittel 40 aufweist. Zur genauen Anbindung des Verbindungsmittels 40 an das Spannelement 38 sei an dieser Stelle auf die in den Figuren 3 bis 5 beschriebenen Ausführungsbeispiele der Niederspannvorrichtung verwiesen. Das Verbindungsmittel 40 weist zudem ein loses Ende 42 auf, an dem ein Aufnahmeelement 44 in Form eines Rings 46 zur Aufnahme von Spannmitteln 48 vorgesehen ist.

Die Einhausung 18 weist an ihrer der Grube zugewandten Stirnseite 50 einen Deckel 52 mit einer Ausnehmung 54 auf, durch die eine Umlenkvorrichtung 56 herauskragt, wobei das Verbindungsmittel 40 durch die Einhausung 18 hindurch- und aus einem Auslass 58 herausgeführt ist.

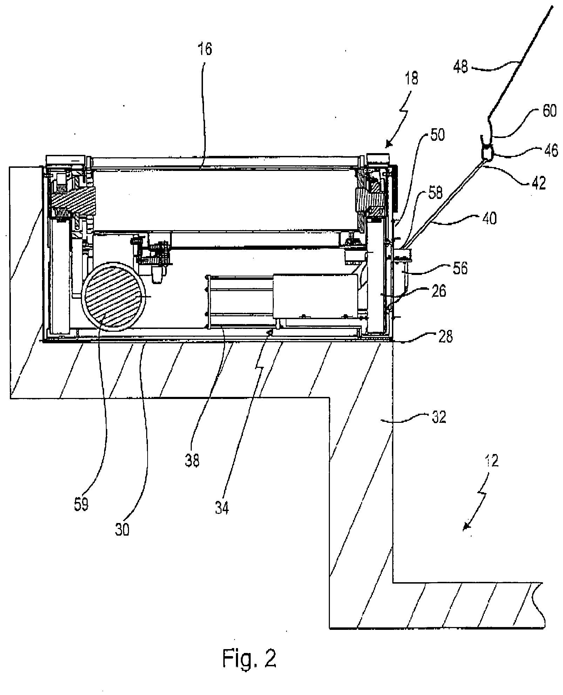

In Figur 2 ist der Bremsenprüfstand 10 aus Figur 1 in vergrößerter Ansicht als vertikaler Längsschnitt entlang der Rollenachsen des Rollensatzes 16 und in eingebautem Zustand dargestellt. Hierzu ist der Boden 28 des Rahmens 26 fest an der Einbauschalung 30 festgelegt, wobei die Einbauschalung 30 fest mit dem Fundament 32 verbunden ist. Des Weiteren sind die Aggregate, wie beispielsweise ein den Rollensatz 16 antreibender Motor 59 dargestellt.

Die Niederspannvorrichtung 34 ist im verbleibenden Zwischenraum zwischen dem Boden 28, dem Rollensatz 16, dem Motor 59 und der Stirnseite 50 der Einhausung 18 im Wesentlichen horizontal ausgerichtet und am Boden 28 des Rahmens 26 festgelegt. Grundsätzlich versteht sich, dass die Niederspannvorrichtung 34 auch noch zur zusätzlichen Stabilisierung an vertikalen Verstrebungen des Rahmens 26 festgelegt sein kann (nicht abgebildet). Des Weiteren versteht sich, dass die Niederspannvorrichtung 34 auch in der Horizontalen gedreht bzw. relativ zur Horizontalen in einem Winkelbereich betragsmäßig zwischen 0 bis 45° zur Horizontalen geneigt sein kann, soweit das der verbleibende Zwischenraum zulässt (nicht dargestellt).

Die Niederspannvorrichtung 34 weist in Einbaulage an der der Grube 12 zugewandten Stirnseite 50 der Einhausung 18 die Umlenkvorrichtung 56 auf, durch die das Verbindungsmittel 40 in einer im Wesentlichen vertikalen Richtung durch den Auslass 58 herausgeführt ist. Es versteht sich, dass das Verbindungsmittel 40 insbesondere dann als im Wesentlichen vertikal ausgerichtet anzusehen ist, wenn der Winkel, der zwischen der Normalen zur horizontalen Ebene bzw. zur Ebene des Prüfstandbodens und dem Verbindungsmittel 40 eingeschlossen ist, betragsmäßig zwischen 0° und ca. 45° beträgt. Jedoch ist auch bei einem eingeschlossenen Winkel von bis zu 60° ebenfalls von einer im Wesentlichen senkrechten Ausrichtung des Verbindungsmittels 40 auszugehen.

Das Verbindungsmittel 40 weist an seinem losen Ende 42 den Ring 46 auf, an dem weitere Spannmittel 48 zum Niederspannen des Fahrzeuges mittels eines Haken 60 verbunden werden. Es versteht sich jedoch, dass die Verbindung zwischen dem Verbindungsmittel 40 und dem Spannmittel 48 auch mittels anderer reversibler formschlüssiger Verbindungen, wie z. B. Steck- oder Schraubverbindungen miteinander verbunden werden können (nicht dargestellt).

In Figur 3 ist eine erste bevorzugte Ausführungsform einer Niederspannvorrichtung 34a in einem vertikalen Längsschnitt durch die Niederspannvorrichtung 34a parallel zu den Rollenachsen des Rollensatzes 16 in Einbaulage (vgl. Figuren 1 und 2) dargestellt.

Teile und Elemente der Niederspannvorrichtung 34a, die mit Teilen oder Elementen der Niederspannvorrichtung 34, dargestellt in den Figuren 1 und 2 gleich oder vergleichbar sind, sind mit den gleichen Bezugszeichen, ergänzt um den Buchstaben a, versehen.

Die Niederspannvorrichtung 34a weist als Spannelement 38a ein hydraulisches Zylinder-Kolben-Aggregat 62 auf, das einen Spannzylinder 64 und einen aus dem Spannzylinder 64 heraus bzw. hineinfahrbaren Kolben 66 aufweist. Der Spannzylinder ist vorliegend als Hydraulikzylinder 67 ausgebildet. Der Kolben 66 ist auf der dem Hydraulikzylinder 67 abgewandten Seite mittels eines Verbinders 68 mit dem Verbindungsmittel 40a verbunden. Das Verbindungsmittel 40a wird durch eine Umlenkrolle 70, die in der Umlenkvorrichtung 56a aufgenommen ist, aus einer im Wesentlichen horizontalen Ausrichtung in eine im Wesentlichen vertikale Ausrichtung umgelenkt. Die Rollenachse 72 ist hierbei quer zur Bewegungsrichtung des Kolbens 66 ausgerichtet.

Die Verbindung zwischen dem Kolben 66 und dem Verbindungsmittel 40a mittels des Verbinders 68 ist vorliegend eine formschlüssige Steckverbindung. Die Verbindung kann jedoch auch durch eine Schraubverbindung oder eine Stoffschlüssige Verbindung mittels Schweißen oder Kleben, oder durch eine Kombination der zuvor genannten Verbindungsformen bewirkt werden (nicht dargestellt).

Das Verbindungsmittel 40a wird entlang der Umlenkrolle 70 durch einen Auslass 58a an der Umlenkvorrichtung 56a herausgeführt, wobei das Verbindungsmittel 40a am Auslass 58a entlang eines Führungselements 73 in Form eines abgerundeten Gleiters 74 gleitet. Es versteht sich, dass der Gleiter 74 bevorzugt aus einem besonders gut gleitfähigem Material, beispielsweise PTFE oder dergleichen besteht oder ein derartiges Material als Beschichtung eines vorzugsweise metallischen Kerns aufweist (nicht dargestellt). Des Weiteren versteht sich, dass der Gleiter 74 auch als Rolle bzw. als Rollenpaar ausgebildet sein kann (nicht abgebildet).

Am Ende des Verbindungselements 40a ist ein Ring 46a festgelegt, der zum formschlüssigen Verbinden mit einem Haken 60a vorgesehen ist, der mit den Spannmitteln 48a verbunden oder verbindbar ist.

Durch ein Herausfahren bzw. Hineinfahren des Kolbens 66 in den Hydraulikzylinder 67 wird das Verbindungsmittel 40a entlang der Umlenkrolle 70 geführt, wobei der aus dem Auslass 58a herausragende Abschnitt 76 des Verbindungsmittels 40a freigegeben bzw. verkürzt und hierdurch die Spannung innerhalb des Verbindungsmittels 40a und dem damit verbundenen Spannmittel 48a vermindert bzw. erhöht wird. Infolge dessen kann das mit dem Spannmittel 48a verbundene Fahrzeug in im Wesentlichen vertikaler Richtung gegen den Rollensatz 16 der Rolleneinheit 14 gedrückt werden (nicht abgebildet vgl. Fig.1). Durch ein Herausfahren des Kolbens 66 aus dem Hydraulikzylinder 67 wird hingegen der herausragende Abschnitt 76 des Verbindungsmittels 40a verlängert, wodurch der Anpressdruck des jeweiligen Fahrzeuges auf den Rollensatz 16 der Rolleneinheit 14 verringert wird (ebenfalls nicht abgebildet vgl. Fig.1).

Figur 4 zeigt eine Niederspannvorrichtung 34b gemäß eines weiteren bevorzugten Ausführungsbeispiels in einem vertikalen Längsschnitt durch die Niederspannvorrichtung 34b parallel zu den Rollenachsen des Rollensatzes 16 in Einbaulage (vgl. Figuren 1 und 2).

Teile oder Elemente der Niederspannvorrichtung 34b, die mit Teilen oder Elementen der Niederspannvorrichtung 34 bzw. 34a, dargestellt in den Figuren 1, 2 bzw. 3, gleich oder vergleichbar sind, sind mit den gleichen Bezugszeichen, ergänzt um den Buchstaben b, versehen.

Die Niederspannvorrichtung 34b weist als Spannelement 38b ein pneumatisches Zylinder-Kolben-Aggregat 62' auf, das einen Spannzylinder 64' und einen aus dem Spannzylinder 64' heraus bzw. hineinfahrbaren Kolben 66' aufweist. Der Spannzylinder 64' ist vorliegend als Pneumatikzylinder 77 ausgebildet. Der Kolben 66' ist auf der dem Pneumatikzylinder 77 abgewandten Seite mittels eines Verbinders 68' mit dem Verbindungsmittel 40b verbunden. Das Verbindungsmittel 40b wird durch eine Umlenkrolle 70', die in einer Umlenkvorrichtung 56b aufgenommen ist, aus einer im Wesentlichen horizontalen Ausrichtung in eine im Wesentlichen vertikale Ausrichtung umgelenkt. Die Rollenachse 72' ist hierbei quer zur Bewegungsrichtung des Kolbens 66' ausgerichtet.

Die Verbindung zwischen dem Kolben 66' und dem Verbindungsmittel 40b mittels des Verbinders 68' ist vorliegend eine formschlüssige Steckverbindung. Die Verbindung kann jedoch auch durch eine Schraubverbindung oder eine Stoffschlüssige Verbindung mittels Schweißen oder Kleben, oder durch eine Kombination der zuvor genannten Verbindungsformen bewirkt werden (nicht dargestellt).

Das Verbindungsmittel 40b wird entlang der Umlenkrolle 70' durch einen Auslass 58b an der Umlenkvorrichtung 56b herausgeführt, wobei das Verbindungsmittel 40b am Auslass 58b entlang eines Führungselements 73' in Form eines abgerundeten Gleiters 74' gleitet. Es versteht sich, dass der Gleiter 74' bevorzugt aus einem besonders gut gleitfähigem Material, beispielsweise PTFE oder dergleichen besteht oder ein derartiges Material als Beschichtung eines vorzugsweise metallischen Kerns aufweist (nicht dargestellt). Des Weiteren versteht sich, dass der Gleiter 74' auch als Rolle bzw. als Rollenpaar ausgebildet sein kann (nicht abgebildet).

Am Ende des Verbindungselements 40b ist ein Ring 46b festgelegt, der zum formschlüssigen Verbinden mit einem Haken 60b vorgesehen ist, der mit den Spannmitteln 48b verbunden oder verbindbar ist.

Durch ein Herausfahren bzw. Hineinfahren des Kolbens 66' in den Pneumatikzylinder 77 wird das Verbindungsmittel 40b entlang der Umlenkrolle 70' geführt, wobei der aus dem Auslass 58b herausragende Abschnitt 76' des Verbindungsmittels 40b freigegeben bzw. verkürzt und hierdurch die Spannung innerhalb des Verbindungsmittels 40b und dem damit verbundenen Spannmittel 48b verringert bzw. erhöht wird. Infolge dessen kann das mit dem Spannmittel 48b verbundene Fahrzeug in im Wesentlichen vertikaler Richtung gegen den Rollensatz 16 der Rolleneinheit 14 gedrückt werden (nicht abgebildet vgl. Fig.1). Durch ein Herausfahren des Kolbens 66' aus dem Pneumatikzylinder 77 wird hingegen der herausragende Abschnitt 76' des Verbindungsmittels 40b verlängert, wodurch der Anpressdruck des jeweiligen Fahrzeuges auf den Rollensatz 16 der Rolleneinheit 14 verringert wird (ebenfalls nicht abgebildet vgl. Fig.1).

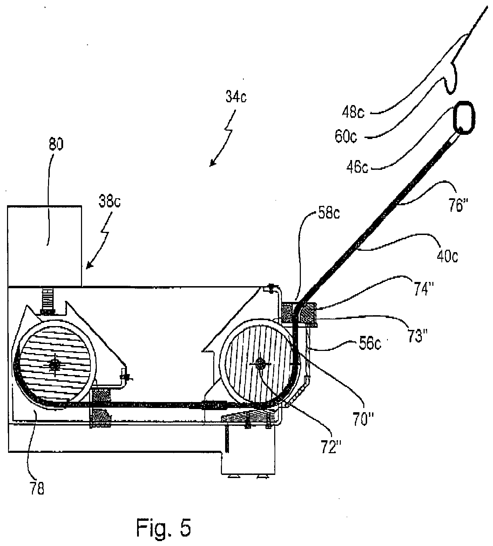

Figur 5 zeigt eine Niederspannvorrichtung 34c gemäß eines noch weiteren bevorzugten Ausführungsbeispiels in einem vertikalen Längsschnitt durch die Niederspannvorrichtung 34c parallel zu den Rollenachsen des Rollensatzes 16 in Einbaulage (vgl. Figuren 1 und 2).

Teile oder Elemente der Niederspannvorrichtung 34c, die mit Teilen oder Elementen der Niederspannvorrichtung 34, 34a, 34b, dargestellt in den Figuren 1, 2, 3 bzw. 4, gleich oder vergleichbar sind, sind mit den gleichen Bezugszeichen, ergänzt um den Buchstaben c, versehen.

Die Niederspannvorrichtung 34c weist als Spannelement 38c eine Winde 78 auf, um die das Verbindungsmittel 40c gewickelt und an der das Verbindungsmittel 40c ggf. festgelegt ist. Die Winde 78 ist zur Betätigung derselben mit oder entgegen des Uhrzeigersinns an einen Antrieb 80 gekoppelt. Das Verbindungsmittel 40c wird durch eine Umlenkrolle 70", die in einer Umlenkvorrichtung 56c aufgenommen ist, aus einer im Wesentlichen horizontalen Ausrichtung in eine im Wesentlichen vertikale Ausrichtung umgelenkt. Die Rollenachse 72" ist hierbei im Wesentlichen parallel zur Drehachse der Winde 78 ausgerichtet. Grundsätzlich ist das Verbindungsmittel 40c bevorzugt einstückig ausgebildet, kann jedoch auch aus zumindest zwei Teilen bestehen, die durch einen Verbinder verbunden sind.

Das Verbindungsmittel 40c wird entlang der Umlenkrolle 70" durch einen Auslass 58c an der Umlenkvorrichtung 56c herausgeführt, wobei das Verbindungsmittel 40c am Auslass 58c entlang eines Führungselements 73" in Form eines abgerundeten Gleiters 74" gleitet. Es versteht sich, dass der Gleiter 74" bevorzugt aus einem besonders gut gleitfähigem Material, beispielsweise PTFE oder dergleichen besteht oder ein derartiges Material als Beschichtung eines vorzugsweise metallischen Kerns aufweist (nicht dargestellt). Des Weiteren versteht sich, dass der Gleiter 74" auch als Rolle bzw. als Rollenpaar ausgebildet sein kann (nicht abgebildet).

Am Ende des Verbindungselements 40c ist ein Ring 46c festgelegt, der zum formschlüssigen Verbinden mit einem Haken 60c vorgesehen ist, der mit den Spannmitteln 48c verbunden oder verbindbar ist.

Durch das Betätigen der Winde 78 mittels des Antriebs 80 im Uhrzeigersinn wird das Verbindungsmittel 40c auf die Winde 78 aufgerollt, wobei der aus dem Auslass 58c herausragende Abschnitt 76" des Verbindungsmittels 40c verkürzt und hierdurch die Spannung innerhalb des Verbindungsmittels 40c und dem damit verbundenen Spannmittel 48c erhöht wird. Infolge dessen, wird das mit dem Spannmittel 48c verbundene Fahrzeug in im Wesentlichen vertikaler Richtung gegen den Rollensatz 16 der Rolleneinheit 14 gedrückt (nicht abgebildet vgl. Fig.1). Durch ein Betätigen der Winde 78 mittels des Antriebs 80 entgegen des Uhrzeigersinns wird demgemäß der herausragende Abschnitt 76" des Verbindungsmittels 40c verlängert, wodurch der Anpressdruck des jeweiligen Fahrzeuges auf den Rollensatz 16 der Rolleneinheit 14 verringert wird (ebenfalls nicht abgebildet vgl. Fig.1). Es versteht sich, dass das Spannelement 38 auch eine Winde oder Schraubspindel und einen Spannzylinder aufweisen kann, wie sie bspw. den Figuren 3 bis 5 zu entnehmen sind (nicht abgebildet). Hierbei ist die Winde oder Schraubspindel mit dem Spannzylinder verbunden oder verbindbar und in im Wesentlichen horizontaler Richtung relativ zum Spannzylinder bewegbar (ebenfalls nicht abgebildet). Hinsichtlich der sich hieraus ergebenden Vorteile und weiterer Ausgestaltungen sei an dieser Stelle auf die Beschreibung verwiesen.

### Bezugszeichenliste

- 10: Bremsenprüfstand
- 12: Grube
- 14: Rolleneinheit
- 16: Rollensatz
- 18: Einhausung
- 20: Aussparung
- 22: Trägerelement
- 24: Trägerelement
- 26: Rahmen
- 28: Boden
- 30: Einbauschalung
- 32: Fundament
- 34; 34a; 34b; 34c: Niederspannvorrichtung
- 36: Befestigungsmittel
- 38; 38a; 38b; 38c: Spannelement
- 40; 40a; 40b; 40c: Verbindungsmittel
- 42: loses Ende
- 44: Aufnahmeelement
- 46; 46a; 46b; 46c: Ring
- 48; 48a; 48b; 48c: Spannmittel
- 50: Stirnseite
- 52: Deckel
- 54: Ausnehmung
- 56; 56a; 56b; 56c: Umlenkvorrichtung
- 58; 58a; 58b; 58c: Auslass
- 59: Motor (Rollensatz)
- 60; 60a; 60b; 60c: Haken
- 62; 62': Zylinder-Kolben-Aggregat
- 64; 64': Spannzylinder
- 66; 66': Kolben
- 67: Hydraulikzylinder
- 68; 68': Verbinder
- 70; 70'; 70": Umlenkrolle
- 72; 72'; 72": Rollenachse
- 73; 73'; 73": Führungselement
- 74; 74'; 74": Gleiter
- 76; 76'; 76": herausragender Abschnitt (Verbindungsmittel)
- 77: Pneumatikzylinder
- 78: Winde
- 80: Antrieb (Winde).

## Patentansprüche

1. Bremsenprüfstand zum Ermitteln der Bremswirkung einer Bremse eines Kraftfahrzeugs, insbesondere eines Kraftfahrzeugs mit Doppel- oder Mehrfachachsen, mit zumindest einem angetriebenen Rollensatz (16) zur Aufnahme zumindest eines Kraftfahrzeugrades und mit einer Niederspannvorrichtung (34; 34a; 34b; 34c), die ein Spannelement (38; 38a; 38b; 38c) aufweist, das über Spannmittel (40; 40a; 40b; 40c; 48; 48a; 48b; 48c) Spannkräfte auf das Kraftfahrzeug überträgt, um einen zusätzlichen Anpressdruck des Kraftfahrzeugrades auf den Rollensatz (16) zu bewirken, wobei das Spannelement (38; 38a; 38b; 38c) eine annähernd horizontale Spannkraft ausübt ,
**dadurch gekennzeichnet,**
**dass** das Spannelement (38; 38a; 38b; 38c) vollständig unterhalb des Rollensatzes (16) angeordnet ist und dass die Spannkraft über eine Umlenkvorrichtung (56; 56a; 56b; 56c) aus ihrer annähernd horizontalen Ausrichtung in eine annähernd vertikale Richtung umgelenkt wird.

2. Bremsenprüfstand nach Anspruch 1, **dadurch gekennzeichnet, dass** die Umlenkvorrichtung (58; 56a; 56b; 56c) zumindest eine Umlenkrolle (70; 70'; 70") mit etwa horizontaler Drehachse aufweist.

3. Bremsenprüfstand nach Anspruch 1, **dadurch gekennzeichnet, dass** die Umlenkvorrichtung (56; 56a; 56b; 56c) einen im Wesentlichen vertikal ausgerichteten Auslass (58; 58a; 58b; 58c) aufweist.

4. Bremsenprüfstand nach Anspruch 3, **dadurch gekennzeichnet, dass** am Auslass (58; 58a; 58b; 58c) Führungselemente (73; 73'; 73") zum Führen der Spannmittel (40; 40a; 40b; 40c) angeordnet sind.

5. Bremsenprüfstand nach Anspruch 1, **dadurch gekennzeichnet, dass** er eine den Rollensatz (16) aufnehmende Einhausung (18) aufweist, die an einer Stirnseite (50) eine Ausnehmung (54) aufweist, durch die die Spannmittel (40; 40a; 40b; 40c; 48; 48a; 48b; 48c) aus der Einhausung (18) herausgeführt sind.

6. Bremsenprüfstand nach Anspruch 1, **dadurch gekennzeichnet, dass** das Spannelement (38; 38a; 38b; 38c) einen Spannzylinder (64; 64') aufweist, der im Wesentlichen horizontal ausgerichtet ist.

7. Bremsenprüfstand nach Anspruch 6, **dadurch gekennzeichnet, dass** der Spannzylinder (64; 64') ein Hydraulikzylinder (67) oder ein Rneumatikzylinder (77) ist.

8. Bremsenprüfstand nach Anspruch 1, **dadurch gekennzeichnet, dass** das Spannelement (38; 38a; 38b; 38c) eine motorisch angetriebene Winde (78) oder Schraubspindel aufweist.

9. Bremsenprüfstand nach Anspruch 1, **dadurch gekennzeichnet, dass** das Spannelement (38; 38a; 38b; 38c) eine Winde (78) oder Schraubspindel und zusätzlich einen Spannzylinder (64;64') aufweist, wobei die Winde (78) oder Schraubspindel mit dem Spannzylinder (64;64') verbunden oder verbindbar ist und in im Wesentlichen horizontaler Richtung relativ zum Spannzylinder (64;64') bewegbar ist.

10. Bremsenprüfstand nach Anspruch 5, **dadurch gekennzeichnet, dass** die Einhausung (18) einen Rahmen (26) aufweist, an dem das Spannelement (38; 38a; 38b; 38c) festgelegt ist.

11. Bremsenprüfstand nach Anspruch 10, **dadurch gekennzeichnet, dass** die Einhausung (18) den Rahmen (26) umschließt, wobei der Rahmen (26) einen Boden (28) zur festen Verankerung der Rolleneinheit (14) aufweist, wobei das Spannelement (38; 38a; 38b; 38c) zwischen dem Boden (28) und dem Rollensatz (16) am Rahmen (26) festgelegt ist.

12. Bremsenprüfstand nach Anspruch 10, **dadurch gekennzeichnet, dass** das Spannelement (38; 38a; 38b; 38c) auf der dem Rollensatz (16) abgewandten Seite des Bodens (28) am Rahmen (26) festgelegt ist.

13. Bremsenprüfstand nach Anspruch 1 oder 2, **dadurch gekennzeichnet, dass** das Spannelement (38; 38a; 38b; 38c) Verbindungsmittel (40; 40a; 40b: 40c) aufweist, die an einem Ende am Spannelement (38; 38a; 38b; 38c) festgelegt sind, und ein loses Ende (42) aufweisen, an dem ein Aufnahmeelement (44) zur Aufnahme der Spannmittel (48; 48a; 48b; 48c) vorgesehen ist.

## Claims

1. Brake test stand for determining the braking action of a brake of a motor vehicle, especially a motor vehicle having twin or multiple axles, having at least one driven roller set (16) for receiving at least one motor vehicle wheel and having a pull-down device (34; 34a; 34b; 34c) which has a clamping element (38; 38a; 38b; 38c) which, via clamping means (40; 40a; 40b; 40c; 48; 48a; 48b; 48c), transmits clamping forces to the motor vehicle in order to effect an additional contact pressure of the motor vehicle wheel on the roller set (16), the clamping element (38; 38a; 38b; 38c) exerting an approximately horizontal clamping force,
**characterised in that**
the clamping element (38; 38a; 38b; 38c) is arranged entirely underneath the roller set (16), and the clamping force is diverted via a diverting device (56; 56a; 56b; 56c) from its approximately horizontal orientation into an approximately vertical direction.

2. Brake test stand according to claim 1, **characterised in that** the diverting device (56; 56a; 56b; 56c) has at least one pulley (70; 70'; 70") having an approximately horizontal rotational axis.

3. Brake test stand according to claim 1, **characterised in that** the diverting device (56; 56a; 56b; 56c) has a substantially vertically oriented outlet (58; 58a; 58b; 58c).

4. Brake test stand according to claim 3, **characterised in that** at the outlet (58; 58a; 58b; 58c) there are arranged guide elements (73; 73'; 73") for guiding the clamping means (40; 40a; 40b; 40c).

5. Brake test stand according to claim 1, **characterised in that** it has a housing (18) that accommodates the roller set (16), which housing has at an end face (50) an opening (54) through which the clamping means (40; 40a; 40b; 40c; 48; 48a; 48b; 48c) pass out of the housing (18).

6. Brake test stand according to claim 1, **characterised in that** the clamping element (38; 38a; 38b; 38c) has a clamping cylinder (64; 64') which is substantially horizontally oriented.

7. Brake test stand according to claim 6, **characterised in that** the clamping cylinder (64; 64') is a hydraulic cylinder (67) or a pneumatic cylinder (77).

8. Brake test stand according to claim 1, **characterised in that** the clamping element (38; 38a; 38b; 38c) has a motor-driven winch (78) or screw jack.

9. Brake test stand according to claim 1, **characterised in that** the clamping element (38; 38a; 38b; 38c) has a winch (78) or screw jack and additionally a clamping cylinder (64; 64'), the winch (78) or screw jack being connected or connectible to the clamping cylinder (64; 64') and being movable in a substantially horizontal direction relative to the clamping cylinder (64; 64').

10. Brake test stand according to claim 5, **characterised in that** the housing (18) has a frame (26) to which the clamping element (38; 38a; 38b; 38c) is fixed.

11. Brake test stand according to claim 10, **characterised in that** the housing (18) surrounds the frame (16), wherein the frame (26) has a base (28) for securely anchoring the roller unit (14), the clamping element (38; 38a; 38b; 38c) being fixed to the frame (26) between the base (28) and the roller set (16)

12. Brake test stand according to claim 10, **characterised in that** the clamping element (38; 38a; 38b; 38c) is fixed to the frame (26) on the side of the base (28) remote from the roller set (16).

13. Brake test stand according to claim 1 or 2, **characterised in that** the clamping element (38; 38a; 38b; 38c) has connecting means (40; 40a; 40b; 40c) which are fixed at one end to the clamping element (38; 38a; 38b; 38c) and have a loose end (42) on which a receiving element (44) for receiving the clamping means (48; 48a; 48b; 48c) is provided.

## Revendications

1. Banc d'essai de frein destiné à déterminer l'action de freinage d'un frein d'un véhicule automobile, en particulier d'un véhicule automobile à double essieu ou à essieu multiple, avec au moins un ensemble de rouleaux entraîné (16) destiné à recevoir au moins une roue de véhicule automobile et avec un dispositif de maintien serré (34 ; 34a ; 34b ; 34c), qui présente un élément de serrage (38 ; 38a ; 38b ; 38c) qui transmet par l'intermédiaire de moyens de serrage (40 ; 40a ; 40b ; 40c ; 48 ; 48a ; 48b ; 48c) des forces de serrage sur le véhicule automobile afin de produire une pression d'application supplémentaire de la roue de véhicule automobile sur l'ensemble de rouleaux (16), sachant que l'élément de serrage (38 ; 38a ; 38b ; 38c) exerce une force de serrage à peu près horizontale,
**caractérisé en ce que** l'élément de serrage (38 ; 38a ; 38b ; 38c) est disposé en totalité en dessous de l'ensemble de rouleaux (16) et **en ce que** la force de serrage est, par l'intermédiaire d'un dispositif de déviation (56 ; 56a ; 56b ; 56c), déviée d'une orientation à peu près horizontale en une direction à peu près verticale.

2. Banc d'essai de frein selon la revendication 1, **caractérisé en ce que** le dispositif de déviation (56 ; 56a ; 56b ; 56c) présente au moins un rouleau de déviation (70 ; 70' ; 70") ayant un axe de rotation à peu près horizontal.

3. Banc d'essai de frein selon la revendication 1, **caractérisé en ce que** le dispositif de déviation (56 ; 56a ; 56b ; 56c) présente une sortie (58 ; 58a ; 58b ; 58c) orientée pour l'essentiel à la verticale.

4. Banc d'essai de frein selon la revendication 3, **caractérisé en ce que** des éléments de guidage (73 ; 73' ; 73") destinés à guider les moyens de serrage (40 ; 40a ; 40b ; 40c) sont disposés à la sortie (58 ; 58a ; 58b ; 58c).

5. Banc d'essai de frein selon la revendication 1, **caractérisé en ce qu'**il présente un boîtier (18), qui reçoit l'ensemble de rouleaux (16) et qui présente sur un côté frontal (50) un évidement (54) par lequel les moyens de serrage (40 ; 40a ; 40b ; 40c ; 48 ; 48a ; 48b ; 48c) sont dirigés hors du boîtier (18).

6. Banc d'essai de frein selon la revendication 1, **caractérisé en ce que** l'élément de serrage (38 ; 38a ; 38b ; 38c) présente un cylindre de serrage (64 ; 64'), qui est orienté pour l'essentiel à l'horizontale.

7. Banc d'essai de frein selon la revendication 6, **caractérisé en ce que** le cylindre de serrage (64 ; 64') est un vérin hydraulique (67) ou un vérin pneumatique (77).

8. Banc d'essai de frein selon la revendication 1, **caractérisé en ce que** l'élément de serrage (38 ; 38a ; 38b ; 38c) présente une broche filetée ou un treuil (78) entraîné par moteur.

9. Banc d'essai de frein selon la revendication 1, **caractérisé en ce que** l'élément de serrage (38 ; 38a ; 38b ; 38c) présente un treuil (78) ou une broche filetée et en plus un cylindre de serrage (64 ; 64'), sachant que le treuil (78) ou la broche filetée est relié ou peut être relié au cylindre de serrage (64 ; 64') et peut être déplacé dans une direction pour l'essentiel horizontale par rapport au cylindre de serrage (64 ; 64').

10. Banc d'essai de frein selon la revendication 5, **caractérisé en ce que** le boîtier (18) présente un cadre (26) sur lequel est fixé en position l'élément de serrage (38 ; 38a ; 38b ; 38c).

11. Banc d'essai de frein selon la revendication 10, **caractérisé en ce que** le boîtier (18) entoure le cadre (26), sachant que le cadre (26) présente un fond (28) destiné à ancrer de manière fixe l'unité de rouleaux (14), sachant que l'élément de serrage (38 ; 38a ; 38b ; 38c) est fixé en position entre le fond (28) et l'ensemble de rouleaux (16) sur le cadre (26).

12. Banc d'essai de frein selon la revendication 10, **caractérisé en ce que** l'élément de serrage (38 ; 38a ; 38b ; 38c) est fixé en position sur le cadre (26) sur le côté du fond (28) qui est opposé à l'ensemble de rouleaux (16).

13. Banc d'essai de frein selon la revendication 1 ou 2, **caractérisé en ce que** l'élément de serrage (38 ; 38a ; 38b ; 38c) présente des moyens de liaison (40 ; 40a ; 40b ; 40c), qui sont fixés par une extrémité sur l'élément de serrage (38 ; 38a ; 38b ; 38c) et qui présentent une extrémité libre (42) sur laquelle est prévu un élément récepteur (44) destiné à recevoir les moyens de serrage (48 ; 48a ; 48b ; 48c).
